# EUROPEAN PATENT APPLICATION

(11) **EP 4 250 211 A1**
(43) Date of publication of application: **27.09.2023**
(21) Application number: 20962498.0
(22) Date of filing: 20.11.2020
(51) Int. Cl.: G06Q 30/00, G06Q 50/10

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: NISHIMAKI, Satoru, Kawasaki-shi, Kanagawa 211-8588 (JP); FUKUI, Masayuki, Kawasaki-shi, Kanagawa 211-8588 (JP); NAKAGAWA, Itaru, Kawasaki-shi, Kanagawa 211-8588 (JP); SATO, Izuru, Kawasaki-shi, Kanagawa 211-8588 (JP)
(74) Representative: Haseltine Lake Kempner LLP
(86) International application number: PCT/JP2020/043490
(87) International publication number: WO 2022/107336

(57) **Abstract**

An information processing program of an embodiment causes a computer to execute a process of accepting, a process of registering in a first data management unit, and a process of registering in a second data management unit. The process of accepting accepts trail data to be registered in a traceability system. The process of registering in the first data management unit registers identifiers that correspond to the accepted trail data in the first data management unit that shares and manages the identifiers between organizations of the traceability system. The process of registering in the second data management unit registers information regarding the accepted trail data in the second data management unit different from the first data management unit, together with the identifiers.

## Description

### FIELD

The embodiments of the present invention relate to an information processing program, an information processing method, and an information processing device.

### BACKGROUND

Conventionally, in a distribution field for a manufacturing supply chain, medicine, food, and the like, a traceability system that can verify how a product was manufactured and processed in an open manner by utilizing a distributed ledger such as a blockchain is known.

### CITATION LIST

### PATENT DOCUMENT

Patent Document 1: Japanese Laid-open Patent Publication No. 2020-46993

### SUMMARY

### [TECHNICAL PROBLEM]

However, in the above conventional technique, there is a disadvantage that comfortable administration will be sometimes impaired due to registration of large volumes of data such as image and video data and a large amount of time series data in a blockchain as evidence data.

For example, when large volumes of evidence data are additionally registered in the blockchain, traffic relating to data synchronization of the blockchain increases. Such an increase in traffic relating to the blockchain sometimes leads to degradation in transaction performance of the blockchain, and the administration of the traceability system will be delayed in some cases.

In one aspect, an object is to provide an information processing program, an information processing method, and an information processing device capable of supporting comfortable administration of a traceability system.

### [SOLUTION TO PPOBLEM]

In one proposal, an information processing program causes a computer to execute a process of accepting, a process of registering in a first data management unit, and a process of registering in a second data management unit. The process of accepting accepts trail data to be registered in a traceability system. The process of registering in the first data management unit registers identifiers that correspond to the accepted trail data in the first data management unit that shares and manages the identifiers between organizations of the traceability system. The process of registering in the second data management unit registers information regarding the accepted trail data in the second data management unit different from the first data management unit, together with the identifiers.

According to an aspect of the embodiments, an information processing program that causes a computer to execute a process, the process includes accepting trail data to be registered in a traceability system; registering identifiers that correspond to the accepted trail data in a first data management unit that manages the identifiers as shared data between organizations of the traceability system; and registering information regarding the accepted trail data in a second data management unit different from the first data management unit, together with the identifiers.

### [ADVANTAGEOUS EFFECTS OF INVENTION]

Comfortable administration of a traceability system may be supported.

### BRIEF DESCRIPTION OF DRAWINGS

FIG. 1 is an explanatory diagram explaining an outline of a traceability system according to an embodiment;
FIG. 2 is a block diagram illustrating a functional configuration example of a server device;
FIG. 3 is an explanatory diagram explaining an outline of trail data to be registered in the traceability system according to the embodiment;
FIG. 4A is a flowchart illustrating an operation example relating to setting of an access right;
FIG. 4B is a flowchart illustrating an operation example relating to setting of an access right;
FIG. 5 is a flowchart illustrating an operation example of the server device;
FIG. 6 is an explanatory diagram explaining an outline of an operation of the traceability system according to an embodiment;
FIG. 7A is a flowchart illustrating an operation example of the server device;
FIG. 7B is a flowchart illustrating an operation example of the server device;
FIG. 7C is a flowchart illustrating an operation example of the server device;
FIG. 8A is an explanatory diagram explaining an outline of an operation of the traceability system according to the embodiment;
FIG. 8B is an explanatory diagram explaining an outline of an operation of the traceability system according to the embodiment; and
FIG. 9 is an explanatory diagram explaining an example of a computer configuration.

### DESCRIPTION OF EMBODIMENTS

Hereinafter, an information processing program, an information processing method, and an information processing device according to embodiments will be described with reference to the drawings. Configurations having the same functions in the embodiments are denoted by the same reference signs, and redundant description will be omitted. Note that the information processing program, the information processing method, and the information processing device described in the following embodiments are merely examples and do not limit the embodiments. In addition, each of the following embodiments may be appropriately combined unless otherwise contradicted.

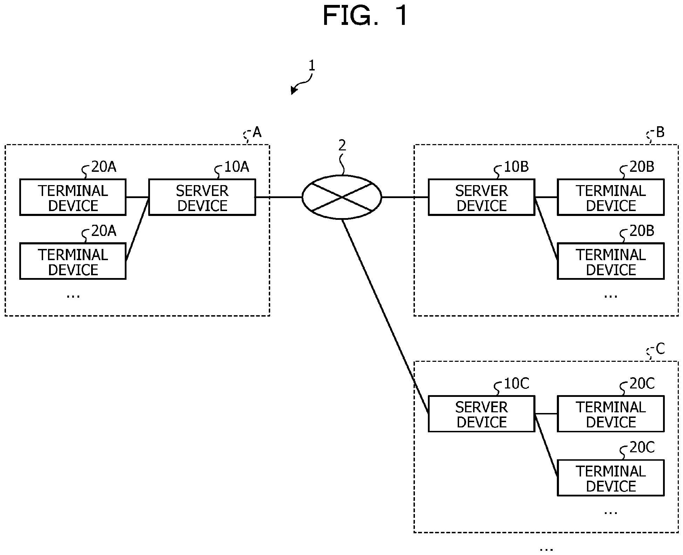

FIG. 1 is an explanatory diagram explaining an outline of a traceability system according to an embodiment. As illustrated in FIG. 1, in a traceability system 1, each organization (organizations A, B, C,...) such as a producer, a processor, and a distributor related to a manufacturing supply chain, medicine, food, and the like is coupled such that bidirectional communication via a network 2 such as the Internet is enabled.

In the traceability system 1, each organization (organizations A, B, C,...) registers history information such as transaction contents and processing contents relating to a product (manufactured article) as evidence (trail) data. This trail data includes an identifier such as an identification number indicating previous history information, together with an identifier such as an identification number for identifying current history information. This lets the traceability system 1 ensure traceability in terms of history such as transaction contents and processing contents relating to a product (manufactured article).

The organizations (organizations A, B, C,...) of the traceability system 1 include server devices 10A, 10B, 10C,... as examples of an information processing device that manages various types of information, and terminal devices 20A, 20B, 20C,... such as personal computers (PCs) used by users, respectively. Note that the server devices 10A, 10B, 10C,... and the terminal devices 20A, 20B, 20C,... for each organization will be referred to as the server devices 10 and the terminal devices 20 unless otherwise distinguished.

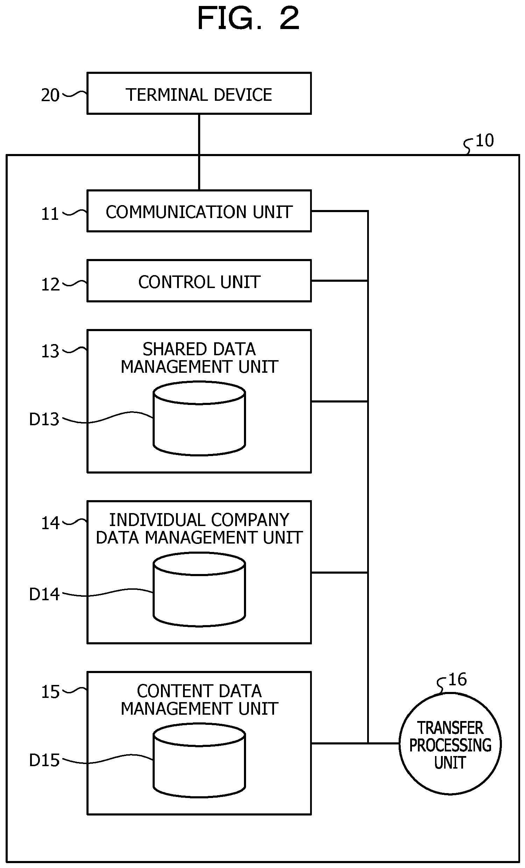

FIG. 2 is a block diagram illustrating a functional configuration example of the server device 10. As illustrated in FIG. 2, the server device 10 includes a communication unit 11, a control unit 12, a shared data management unit 13, an individual company data management unit 14, a content data management unit 15, and a transfer processing unit 16.

The communication unit 11 is a processing unit that communicates with another device (such as the terminal device 20 or the server device 10 of another organization as an example) via a communication cable or the like under the control of the control unit 12.

For example, the communication unit 11 receives, from the terminal device 20, registration data to be registered as trail data for transaction contents, processing contents, and the like relating to a product (manufactured article). This registration data (trail data) includes history information such as transaction contents and processing contents, and content data indicating the realities of the transaction and processing (such as text or video as an example).

In addition, the communication unit 11, for example, transmits a request to the server device 10 of another organization and receives a response to the transmitted request. The communication unit 11 also communicates with the server device 10 of another organization in relation to data synchronization between organizations in the shared data management unit 13.

The control unit 12 is a processing unit that controls various operations in the server device 10. The control unit 12 can be implemented by a central processing unit (CPU), a micro processing unit (MPU), or the like. In addition, the control unit 12 can also be implemented by hard wired logic such as an application specific integrated circuit (ASIC) or a field programmable gate array (FPGA).

For example, when accepting the trail data to be registered in the traceability system 1 from the terminal device 20 via the communication unit 11, the control unit 12 performs a registration process to register the accepted trail data. In addition, when accepting the identifier relating to the trail data to be acquired, from the terminal device 20 via the communication unit 11, the control unit 12 performs a process of acquiring the trail data corresponding to the accepted identifier and outputting the acquired trail data to the terminal device 20.

The shared data management unit 13 is a processing unit that manages shared data D13 shared between organizations (organizations A, B, C,...) of the traceability system 1 for the trail data to be registered. Specifically, the shared data management unit 13 shares the shared data D13 between the participant organizations (organizations A, B, C,...) via a distributed ledger according to a distributed ledger technique such as a blockchain, by data synchronization with the server devices 10 between the participant organizations (organizations A, B, C,...) via the communication unit 11.

The individual company data management unit 14 is a processing unit that manages individual company data D14 within the organization (individual company) for the trail data to be registered, without sharing the individual company data D14 between the organizations (organizations A, B, C,...). As the individual company data management unit 14, for example, a known database such as MongoDB or CouchDB can be applied.

The content data management unit 15 is a processing unit that manages content data D15 within the organization (individual company) for the trail data to be registered, without sharing the content data D15 between the organizations (organizations A, B, C,...), similarly to the individual company data management unit 14. As the content data management unit 15, for example, a known web server (such as web-based distributed authoring and versioning (WebDAV)) capable of storing and acquiring various types of media data and text data can be applied.

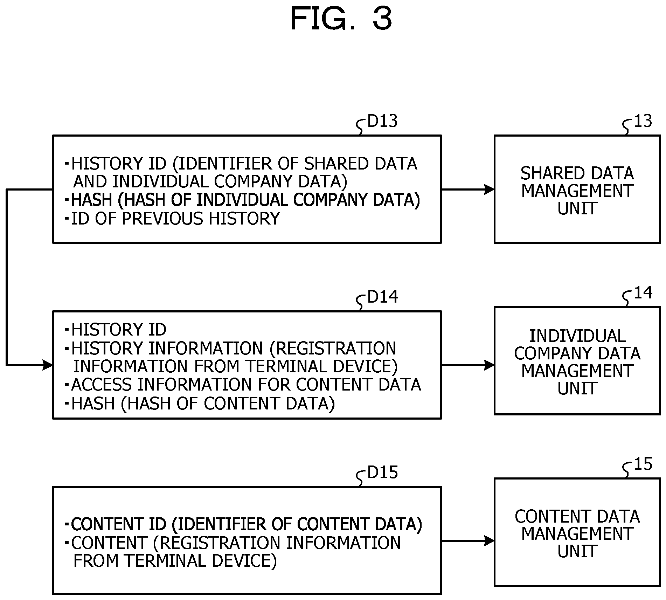

FIG. 3 is an explanatory diagram explaining an outline of the trail data to be registered in the traceability system 1 according to the embodiment. As illustrated in FIG. 3, in the traceability system 1, the trail data (history information and content) to be registered is registered and managed by being divided into the shared data D13, the individual company data D14, and the content data D15.

Specifically, for the trail data to be registered, the server device 10 registers the shared data D13 to be shared between organizations in the shared data management unit 13, registers the individual company data D14 to be managed within the organization in the individual company data management unit 14, and registers the content data D15 relating to the content in the content data management unit 15.

Here, the shared data D13 includes a history identifier (ID) (the identifier of the shared data and the individual company data) corresponding to the trail data, a hash (a hash value of the individual company data D14), which is summary information on contents to be registered as the individual company data D14, and the ID of a previous history.

By referring to this shared data D13, the traceability system 1 can track histories such as transaction contents and processing contents relating to a product (manufactured article), based on the history ID and the ID of a previous history included in the shared data D13. In addition, the traceability system 1 can verify the presence or absence of data falsification, by comparing the hash included in the shared data D13 and the hash worked out from the individual company data D14.

The individual company data D14 includes the same history identifier (ID) as the history ID registered in the shared data D13, history information (registration information from the terminal device 20), access information for the content data D15, and a hash (a hash value of the content data D15), which is summary information on the content data D15. Note that the access information for the content data D15 is, for example, information indicating a storage destination of the content data D15 in the content data management unit 15 (such as a uniform resource locator (URL) of the storage destination).

By referring to this individual company data D14, the traceability system 1 can obtain the history information registered as the trail data. In addition, the traceability system 1 can access the content data D15 registered as the trail data. The traceability system 1 also can verify the presence or absence of data falsification, by comparing the hash included in the individual company data D14 and the hash worked out from the content data D15.

The content data D15 includes a content ID (the identifier of the content data) and data indicating content (the registration information from the terminal device 20) such as video or text related to transaction contents, processing contents, or the like.

The transfer processing unit 16 is a processing unit that performs a process relating to transfer of various types of data under the control of the control unit 12.

For example, when accepting an access request for data of which the identifier is designated from the terminal device 20, the transfer processing unit 16 specifies the organization in charge of management of the data, based on the identifier. Specifically, when the identifier has a configuration such as the organization name + the identification number, the transfer processing unit 16 specifies the organization in charge of management of the data from the organization name included in the identifier. In addition, when the identifier does not include the organization name or the like, the transfer processing unit 16 specifies the organization by transmitting the identifier to the server device 10 of each participant organization (organizations A, B, C,...), and inquiring whether or not each participant organization is in charge of management of information corresponding to the identifier. Next, the transfer processing unit 16 transfers the access request to the server device 10 of the specified organization in charge of management and transfers a response according to the access request to the terminal device 20.

In addition, when accepting an access request for data managed within the organization in the individual company data management unit 14 or the content data management unit 15 from the server device 10 of another organization, the transfer processing unit 16 reads the requested data from the individual company data management unit 14 or the content data management unit 15 and transfers the read data to the requesting source via the communication unit 11. At this time, the transfer processing unit 16 may verify the presence or absence of the access right set for each organization with reference to a preset access control list (ACL) and transfer the data to the requesting source according to the result of this verification. For example, when the access right for the data is provided for the requesting source organization, the transfer processing unit 16 transfers the data to the requesting source. When no access right is provided, the transfer processing unit 16 returns an error to the requesting source.

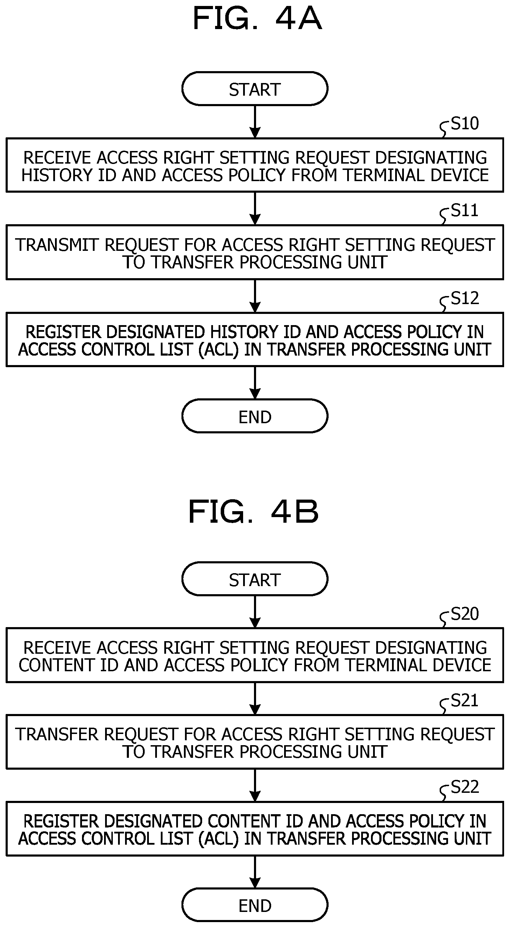

FIGs. 4A and 4B are flowcharts illustrating operation examples relating to setting of an access right. Specifically, FIG. 4A is a flowchart illustrating an operation example about setting registration for an access control list relating to the individual company data management unit 14. FIG. 4B is a flowchart illustrating an operation example about setting registration for an access control list relating to the content data management unit 15.

As illustrated in FIG. 4A, when the process is started, the communication unit 11 receives an access right setting request designating an individual company data ID indicating an organization and an access policy indicating the presence or absence of the access right for that organization, from the terminal device 20 (S10).

Next, the control unit 12 transmits a request for the access right setting request received by the communication unit 11 to the transfer processing unit 16 (S11). Next, the transfer processing unit 16 registers the access policy for the organization corresponding to the individual company data ID in the access control list, based on the access right setting request (S12), and ends the process.

As illustrated in FIG. 4B, when the process is started, the communication unit 11 receives an access right setting request designating the content ID indicating content and an access policy indicating the presence or absence of an access right for that content, from the terminal device 20 (S20).

Next, the control unit 12 transmits a request for the access right setting request received by the communication unit 11 to the transfer processing unit 16 (S21). Next, the transfer processing unit 16 registers the access policy for the content corresponding to the content ID in the access control list, based on the access right setting request (S22), and ends the process.

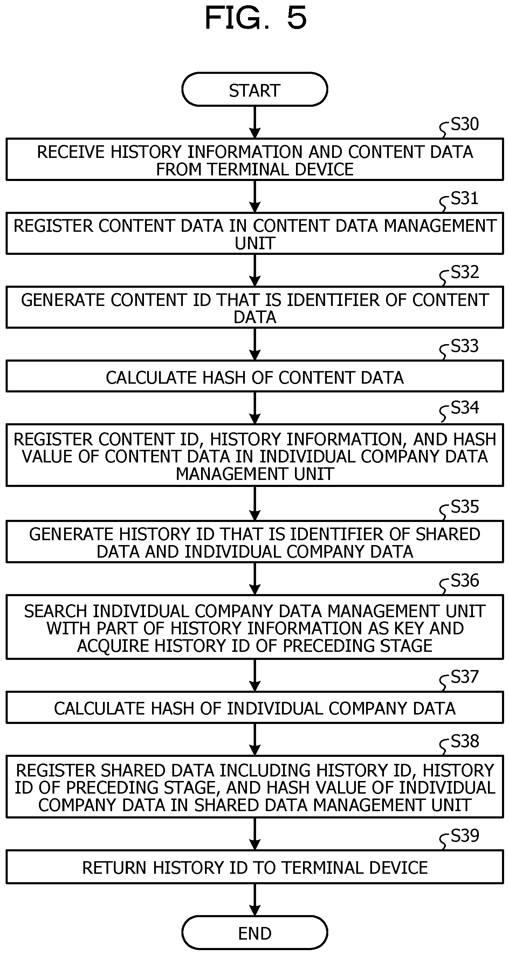

Next, details of the operation of the server device 10 relating to the registration of the trail data to be registered will be described. FIG. 5 is a flowchart illustrating an operation example of the server device.

As illustrated in FIG. 5, when the process is started, the communication unit 11 receives the history information regarding the trail data to be registered and the content data D15 from the terminal device 20 (S30). The communication unit 11 passes the received data to the control unit 12.

Next, the control unit 12 registers the received content data D15 in the content data management unit 15 (S31) and generates a content ID that is the identifier (access destination) of the registered content data D15 (S32). For example, this content ID may be a URL or the like indicating the storage destination of the content data D15 stored in the content data management unit 15.

Next, the control unit 12 calculates a hash value of the content data D15 (S33) and registers the content ID, the history information, and the hash value of the content data D15 in the individual company data management unit 14 as the individual company data D14 (S34).

Next, the control unit 12 generates a history ID that is the identifier of the shared data D13 and the individual company data D14 relating to the trail data to be registered (S35). The control unit 12 includes the generated history ID in the individual company data D14 to register the history ID in the individual company data management unit 14.

Next, the control unit 12 searches the individual company data management unit 14 with a part of the history information as a key and retrieves the history information relevant to the transaction contents and processing contents that are at the preceding stage of the transaction contents and the processing contents in the trail data to be registered. This lets the control unit 12 acquire the history ID of the history information on the preceding stage (S36).

Next, the control unit 12 calculates the hash value of the individual company data D14 (S37) and registers the shared data D13 including the history ID, the history ID of the preceding stage, and the hash value of the individual company data D14 in the shared data management unit 13 (S38). Next, the control unit 12 returns the history ID relating to the trail data to be registered to the terminal device 20 via the communication unit 11 (S39) and ends the process.

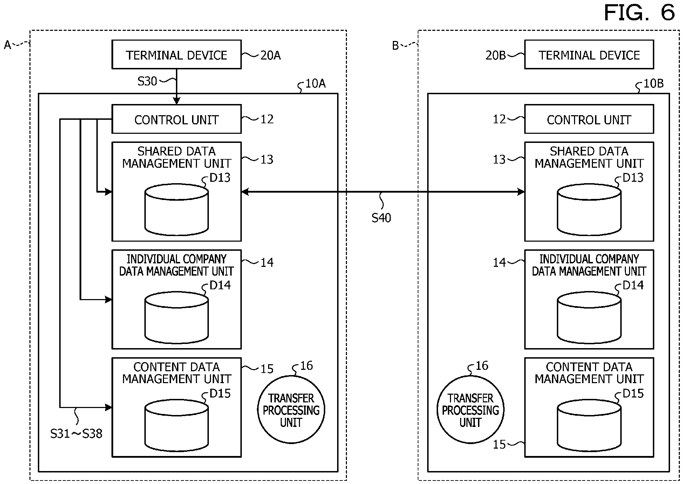

FIG. 6 is an explanatory diagram explaining an outline of an operation of the traceability system according to the embodiment. In the example in FIG. 6, it is assumed that the trail data is registered in the server device 10A by the terminal device 20A of the organization A in S30. The server device 10A of the organization A performs the registration process to register the accepted trail data (S31 to S38).

This registers the shared data D13 including the history ID, the history ID of the preceding stage, and the hash value of the individual company data D14 in the shared data management unit 13. In addition, the individual company data D14 including the history ID, the content ID, the history information, and the hash value of the content data D15 is registered in the individual company data management unit 14. In addition, the content data D15 is registered in the content data management unit 15.

The shared data management unit 13 of the server device 10A shares the shared data D13 between the participant organizations via the distributed ledger, by data synchronization with the server devices 10 between the participant organizations (organizations A, B, C,...) (S40). This makes, for example, the shared data D13 in the shared data management unit 13 of the server device 10A and the shared data D13 in the shared data management unit 13 of the server device 10B be the same data.

Next, details of the operation of the server device 10 when the data registered in the traceability system 1 is acquired from the terminal device 20 will be described.

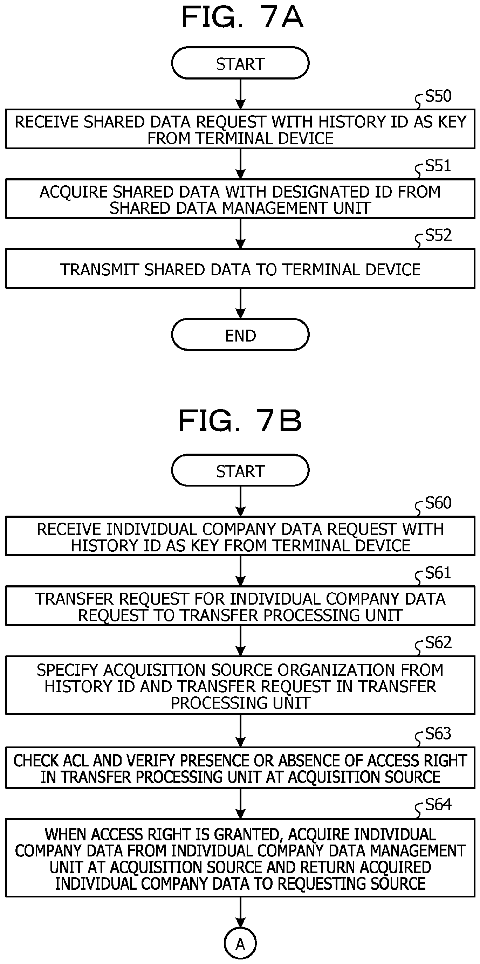

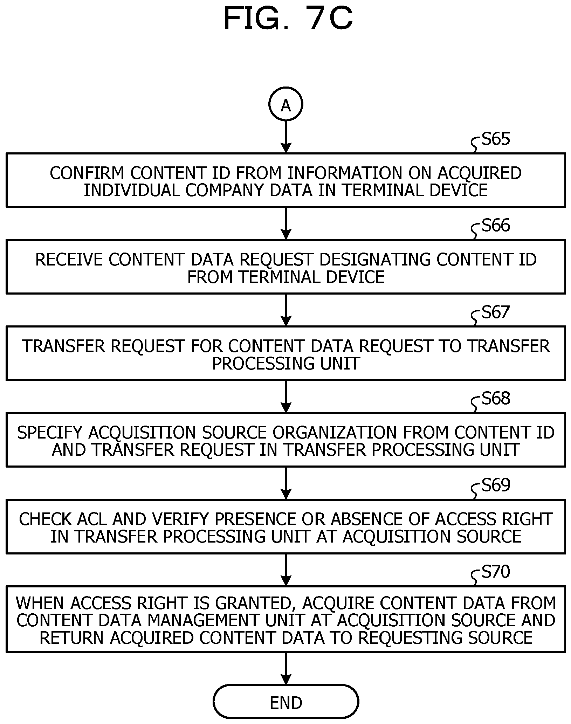

FIGs. 7A to 7C are flowcharts illustrating operation examples of the server device 10. Specifically, FIG. 7A is a flowchart illustrating an operation example of the server device 10 when the relevant shared data D13 is acquired with the identifier (history ID) as a key. FIGs. 7B and 7C are flowcharts illustrating an operation example of the server device 10 when the relevant individual company data D14 and content data D15 are acquired with the identifier (history ID) as a key.

As illustrated in FIG. 7A, when the process is started, the communication unit 11 receives a shared data request with the history ID as a key from the terminal device 20 (S50). The communication unit 11 passes the received shared data request to the control unit 12.

Next, the control unit 12 acquires the shared data D13 relevant to the designated ID from the shared data management unit 13 (S51). Next, the control unit 12 transmits the acquired shared data D13 to the terminal device 20 via the communication unit 11 (S52) and ends the process.

As illustrated in FIG. 7B, when the process is started, the communication unit 11 receives an individual company data request with the history ID as a key from the terminal device 20 (S60). The communication unit 11 passes the received individual company data request to the control unit 12.

Next, the control unit 12 transfers a request for the individual company data request to the transfer processing unit 16 (S61). Next, the transfer processing unit 16 specifies the acquisition source organization from the history ID included in the individual company data request and transfers a request to the server device 10 of the specified organization (S62).

The transfer processing unit 16 of the server device 10 that has received the request (the transfer processing unit 16 at the acquisition source) checks the ACL and verifies whether or not the requesting source organization has an access right (S63).

Next, when the access right is granted, the transfer processing unit 16 at the acquisition source acquires the individual company data D14 relevant to the history ID included in the individual company data request, from the individual company data management unit 14 at the acquisition source, and returns the acquired individual company data D14 to the requesting source of the request. The transfer processing unit 16 at the requesting source transfers the acquired individual company data D14 to the terminal device 20 (S64).

Next, the terminal device 20 confirms the content ID from the acquired individual company data D14 (S65). Next, the communication unit 11 receives a content data request designating the content ID from the terminal device 20 (S66). The communication unit 11 passes the received content data request to the control unit 12.

Next, the control unit 12 transfers a request for the content data request to the transfer processing unit 16 (S67). Next, the transfer processing unit 16 specifies the acquisition source organization from the content ID included in the content data request and transfers a request to the server device 10 of the specified organization (S68). Note that, in the present embodiment, since the content ID is the address information indicating the storage destination of the content, the organization indicated by this address information is specified.

The transfer processing unit 16 of the server device 10 that has received the request (the transfer processing unit 16 at the acquisition source) checks the ACL and verifies whether or not the requesting source organization has an access right (S69).

Next, when the access right is granted, the transfer processing unit 16 at the acquisition source acquires the content data D15 relevant to the content ID included in the content data request, from the content data management unit 15 at the acquisition source, and returns the acquired content data D15 to the requesting source of the request. The transfer processing unit 16 at the requesting source transfers the acquired content data D15 to the terminal device 20 (S70).

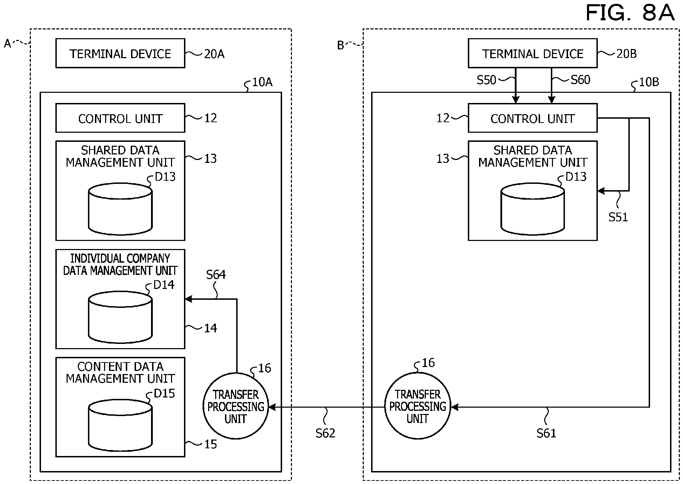

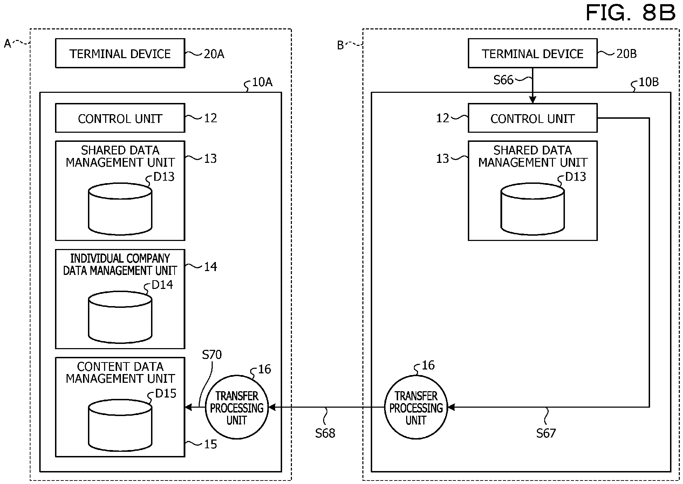

FIGs. 8A and 8B are explanatory diagrams explaining outlines of operations of the traceability system according to the embodiment. In the example in FIG. 8A, it is assumed that there is a shared data request with the history ID as a key from the terminal device 20B of the organization B to the server device 10B in S50. This lets the server device 10B acquire the shared data D13 relevant to the designated ID from the shared data management unit 13 and return the acquired shared data D13 to the terminal device 20B (S51 and S52).

Next, the terminal device 20B makes an individual company data request to the server device 10B with the ID in the shared data D13 as a key (S60). The control unit 12 of the server device 10B transfers a request for the individual company data request to the transfer processing unit 16 (S61).

Next, the transfer processing unit 16 specifies the relevant organization based on the ID included in the individual company data request and transfers a request for the individual company data request to the server device 10A of the specified organization A (S62). The transfer processing unit 16 of the server device 10A acquires the individual company data D14 based on the ID included in the individual company data request and returns the acquired individual company data D14 to the server device 10B at the requesting source. The transfer processing unit 16 of the server device 10B transfers the individual company data D14 returned from the server device 10A to the terminal device 20B (S64). This allows the terminal device 20B of the organization B to confirm the individual company data D14 registered in the organization A based on the ID.

Note that the terminal device 20B may verify the data consistency by comparing the hash included in the acquired shared data D13 and the hash calculated from the acquired individual company data D14.

In the example in FIG. 8B, it is assumed that there is a content data request designating the content ID from the terminal device 20B of the organization B to the server device 10B in S66. This lets the control unit 12 of the server device 10B transfer a request for the content data request to the transfer processing unit 16 (S67).

Next, the transfer processing unit 16 specifies the relevant organization based on the content ID included in the content data request and transfers a request for the content data request to the server device 10A of the specified organization A (S68). The transfer processing unit 16 of the server device 10A acquires the content data D15 based on the ID included in the content data request and returns the acquired content data D15 to the server device 10B at the requesting source. The transfer processing unit 16 of the server device 10B transfers the content data D15 returned from the server device 10A to the terminal device 20B (S70). This allows the terminal device 20B of the organization B to confirm the content data D15 registered in the organization A based on the ID.

Note that the terminal device 20B may verify the data consistency by comparing the hash included in the acquired individual company data D14 and the hash calculated from the acquired content data D15.

As described above, the server device 10 accepts the trail data to be registered in the traceability system 1, from the terminal device 20. The server device 10 registers the identifier that corresponds to the accepted trail data in the shared data management unit 13 that shares and manages the identifier between the organizations of the traceability system 1. The server device 10 registers information regarding the accepted trail data in the individual company data management unit 14 together with the identifier corresponding to the trail data.

This, in the traceability system 1, registers the identifier corresponding to the trail data to be registered, in the shared data management unit 13 and registers the information regarding the trail data in the individual company data management unit 14 together with the identifier. Therefore, an increase in traffic relating to data synchronization between the organizations may be suppressed in the shared data management unit 13. Consequently, in the traceability system 1, there may be no possibility of causing degradation in transaction performance of the shared data management unit 13, and comfortable administration may be achieved.

In addition, the shared data management unit 13 of the server device 10 shares data between the organizations via a distributed ledger for between the organizations of the traceability system 1. This allows the traceability system 1 to share the identifier corresponding to the trail data between the organizations via the distributed ledger.

In addition, the server device 10 registers summary information on the information regarding the accepted trail data in the shared data management unit 13 together with the identifier corresponding to the trail data. This allows the traceability system 1 to verify the information regarding the trail data registered in the individual company data management unit 14, based on the summary information registered in the shared data management unit 13.

In addition, the server device 10 registers the accepted trail data in the content data management unit 15 and registers information indicating an access destination for the trail data registered in the content data management unit 15 in the individual company data management unit 14 together with the identifier corresponding to the trail data. This allows the traceability system 1 to access the trail data registered in the content data management unit 15, based on the information indicating the access destination, which is registered in the individual company data management unit 14.

In addition, the server device 10 registers summary information on the trail data registered in the content data management unit 15 in the individual company data management unit 14 together with the identifier corresponding to the trail data. This allows the traceability system 1 to verify the trail data registered in the content data management unit 15, based on the summary information registered in the individual company data management unit 14.

In addition, the server device 10 accepts an identifier relating to the trail data to be acquired, from among the identifiers registered in the shared data management unit 13. Next, the server device 10 specifies an organization that manages the trail data corresponding to this identifier, based on the accepted identifier. Next, the server device 10 requests the specified organization for the trail data corresponding to the accepted identifier. This allows the traceability system 1 to obtain the trail data corresponding to the identifier, based on the identifier registered in the shared data management unit 13.

In addition, when accepting the request for the trail data corresponding to the identifier, the server device 10 verifies whether or not the requesting source organization is an organization to which the access right is granted, based on the access right for the data preset for each organization. Next, the server device 10 transmits the trail data corresponding to the identifier to the requesting source, based on the verification result. This allows the traceability system 1 to control access to the trail data for each organization.

Note that, in the traceability system 1 of the present embodiment, it is assumed that access to the trail data can be controlled for each organization, but the traceability system 1 may perform access control for each user with finer granularity. Specifically, in the setting of the access right described above, the control unit 12 of the server device 10 sets the access rights for each user in the transfer processing unit 16. Then, the control unit 12 performs a user authentication process as a preprocess for accepting a request for the trail data corresponding to the identifier from the terminal device 20 and gives authentication information including user information obtained by the user authentication to the transfer processing unit 16 to notify the transfer processing unit 16 of the given authentication information. The transfer processing unit 16 verifies whether or not the requesting source user is a user to whom an access right is granted, based on the given authentication information. Note that the verification of the access right by the authentication information may be applied such that attribute information given to the user, such as a role or assigned project information as an example, is employed as a unit and access control in an organizational unit is enabled.

Note that each component of each of the illustrated devices does not necessarily have to be physically configured as illustrated in the drawings. In other words, the specific forms of distribution and integration of each of the devices are not limited to the illustrated forms, and all or some of the devices can be configured by being functionally or physically distributed and integrated in any unit, according to various loads, use status, and the like.

In addition, all or an optional part of various processing functions of the communication unit 11, the control unit 12, the shared data management unit 13, the individual company data management unit 14, the content data management unit 15, and the transfer processing unit 16 of the server device 10 may be executed on a CPU (or a microcomputer such as an MPU or a micro controller unit (MCU)). Furthermore, it is needless to say that all or an optional part of various processing functions may be executed on a program analyzed and executed by a CPU (or a microcomputer such as an MPU or an MCU) or on hardware by wired logic. In addition, various processing functions performed by the server device 10 may be executed by a plurality of computers in cooperation though cloud computing.

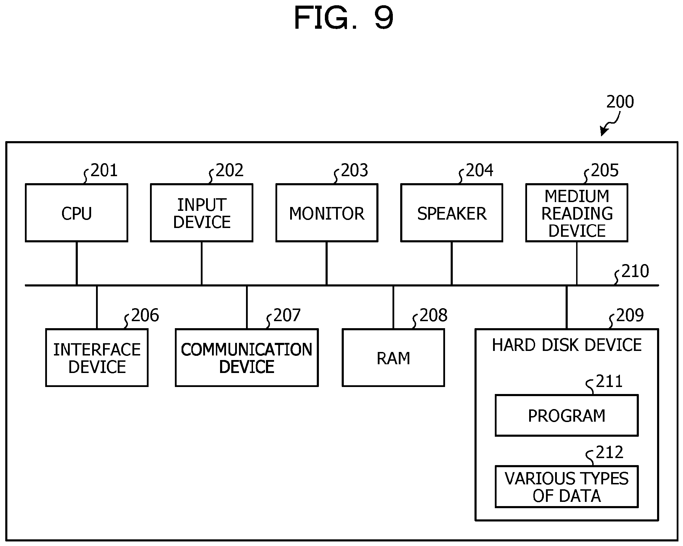

Meanwhile, various processes described in the above embodiments can be implemented by a computer executing a program prepared beforehand. Thus, hereinafter, an example of a computer configuration (hardware) that executes a program having functions similar to the functions of the embodiments described above will be described. FIG. 9 is an explanatory diagram explaining an example of a computer configuration.

As illustrated in FIG. 9, a computer 200 includes a CPU 201 that executes various arithmetic processes, an input device 202 that accepts data input, a monitor 203, and a speaker 204. In addition, the computer 200 includes a medium reading device 205 that reads a program or the like from a storage medium, an interface device 206 for coupling to various devices, and a communication device 207 for coupling to and communicating with an external device in a wired or wireless manner. The computer 200 also includes a random access memory (RAM) 208 that temporarily stores various types of information, and a hard disk device 209. Furthermore, each of the units (201 to 209) in the computer 200 is coupled to a bus 210.

The hard disk device 209 stores a program 211 for executing various processes of the functional configuration (for example, the communication unit 11, the control unit 12, the shared data management unit 13, the individual company data management unit 14, the content data management unit 15, and the transfer processing unit 16) described in the above embodiments. In addition, the hard disk device 209 stores various types of data 212 that the program 211 refers to. The input device 202 accepts, for example, input of operation information from an operator. The monitor 203 displays, for example, various screens operated by the operator. For example, a printing device and the like are coupled to the interface device 206. The communication device 207 is coupled to a communication network such as a local area network (LAN) and exchanges various types of information with an external device via the communication network.

By reading the program 211 stored in the hard disk device 209 and loading the read program 211 into the RAM 208 to execute the loaded program 211, the CPU 201 performs various processes relating to the functional configuration (for example, the communication unit 11, the control unit 12, the shared data management unit 13, the individual company data management unit 14, the content data management unit 15, and the transfer processing unit 16) described above. Note that the program 211 does not have to be stored in the hard disk device 209. For example, the program 211 stored in a storage medium readable by the computer 200 may be read and executed. For example, the storage medium readable by the computer 200 corresponds to a portable recording medium such as a compact disc read-only memory (CD-ROM), a digital versatile disc (DVD) disk, or a universal serial bus (USB) memory, a semiconductor memory such as a flash memory, a hard disk drive, or the like. In addition, this program 211 may be stored in a device coupled to a public line, the Internet, a LAN, or the like, and the computer 200 may read the program 211 from such a device to execute the program 211.

### REFERENCE SIGNS LIST

- 1: Traceability system
- 2: Network
- 10, 10A to 10C: Server device
- 11: Communication unit
- 12: Control unit
- 13: Shared data management unit
- 14: Individual company data management unit
- 15: Content data management unit
- 16: Transfer processing unit
- 20, 20A to 20C: Terminal device
- 200: Computer
- 201: CPU
- 202: Input device
- 203: Monitor
- 204: Speaker
- 205: Medium reading device
- 206: Interface device
- 207: Communication device
- 208: RAM
- 209: Hard disk device
- 210: Bus
- 211: Program
- 212: Various types of data
- A to C: Organization
- D13: Shared data
- D14: Individual company data
- D15: Content data

## Claims

1. An information processing program that causes a computer to execute a process, the process comprising:
accepting trail data to be registered in a traceability system;
registering identifiers that correspond to the accepted trail data in a first data management unit that manages the identifiers as shared data between organizations of the traceability system; and
registering information regarding the accepted trail data in a second data management unit different from the first data management unit, together with the identifiers.

2. The information processing program according to claim 1, wherein
the first data management unit shares data between the organizations via a distributed ledger for between the organizations of the traceability system.

3. The information processing program according to claim 1, wherein
the registering in the first data management unit includes registering summary information on the information regarding the accepted trail data in the first data management unit together with the identifiers.

4. The information processing program according to claim 1, wherein
the registering in the second data management unit includes registering the accepted trail data in a third data management unit different from the second data management unit, and registering information that indicates an access destination for the trail data registered in the third data management unit, in the second data management unit together with the identifiers.

5. The information processing program according to claim 4, wherein
the registering in the second data management unit includes registering summary information on the trail data in the second data management unit together with the identifiers.

6. The information processing program according to claim 1, for further causing the computer to execute the process comprising:
accepting the identifiers that relate to the trail data to be acquired, from among the identifiers registered in the first data management unit;
specifying the organizations that manage the trail data that corresponds to the identifiers, based on the accepted identifiers; and
requesting the specified organizations for the trail data that corresponds to the accepted identifiers.

7. The information processing program according to claim 6, for further causing the computer to execute the process comprising:
when accepting a request for the trail data that corresponds to the identifiers, verifying whether or not users at requesting sources are the users to whom access rights are granted, based on the access rights for data preset for each of the users; and
transmitting the trail data that corresponds to the identifiers to the requesting sources, based on a result of the verifying.

8. An information processing method executed by a computer, the information processing method comprising:
accepting trail data to be registered in a traceability system;
registering identifiers that correspond to the accepted trail data in a first data management unit that manages the identifiers as shared data between organizations of the traceability system; and
registering information regarding the accepted trail data in a second data management unit different from the first data management unit, together with the identifiers.

9. The information processing method according to claim 8, wherein
the first data management unit shares data between the organizations via a distributed ledger for between the organizations of the traceability system.

10. The information processing method according to claim 8, wherein
the registering in the first data management unit includes registering summary information on the information regarding the accepted trail data in the first data management unit together with the identifiers.

11. The information processing method according to claim 8, wherein
the registering in the second data management unit includes registering the accepted trail data in a third data management unit different from the second data management unit, and registering information that indicates an access destination for the trail data registered in the third data management unit, in the second data management unit together with the identifiers.

12. The information processing method according to claim 11, wherein
the registering in the second data management unit includes registering summary information on the trail data in the second data management unit together with the identifiers.

13. The information processing method according to claim 8, for further causing the computer to execute the process comprising:
accepting the identifiers that relate to the trail data to be acquired, from among the identifiers registered in the first data management unit;
specifying the organizations that manage the trail data that corresponds to the identifiers, based on the accepted identifiers; and
requesting the specified organizations for the trail data that corresponds to the accepted identifiers.

14. The information processing method according to claim 13, for further causing the computer to execute the process comprising:
when accepting a request for the trail data that corresponds to the identifiers, verifying whether or not users at requesting sources are the users to whom access rights are granted, based on the access rights for data preset for each of the users; and
transmitting the trail data that corresponds to the identifiers to the requesting sources, based on a result of the verifying.

15. An information processing device comprising a control unit that executes a process including:
accepting trail data to be registered in a traceability system;
registering identifiers that correspond to the accepted trail data in a first data management unit that manages the identifiers as shared data between organizations of the traceability system; and
registering information regarding the accepted trail data in a second data management unit different from the first data management unit, together with the identifiers.

16. The information processing device according to claim 15, wherein
the first data management unit shares data between the organizations via a distributed ledger for between the organizations of the traceability system.

17. The information processing device according to claim 15, wherein
the registering in the first data management unit includes registering summary information on the information regarding the accepted trail data in the first data management unit together with the identifiers.

18. The information processing device according to claim 15, wherein
the registering in the second data management unit includes registering the accepted trail data in a third data management unit different from the second data management unit, and registering information that indicates an access destination for the trail data registered in the third data management unit, in the second data management unit together with the identifiers.

19. The information processing device according to claim 18, wherein
the registering in the second data management unit includes registering summary information on the trail data in the second data management unit together with the identifiers.

20. The information processing device according to claim 15, wherein the control unit that further executes the process including:
accepting the identifiers that relate to the trail data to be acquired, from among the identifiers registered in the first data management unit;
specifying the organizations that manage the trail data that corresponds to the identifiers, based on the accepted identifiers; and
requesting the specified organizations for the trail data that corresponds to the accepted identifiers.

21. The information processing device according to claim 20, wherein the control unit that further executes the process including:
when accepting a request for the trail data that corresponds to the identifiers, verifying whether or not users at requesting sources are the users to whom access rights are granted, based on the access rights for data preset for each of the users; and
transmitting the trail data that corresponds to the identifiers to the requesting sources, based on a result of the verifying.
